# EUROPÄISCHE PATENTSCHRIFT

(11) **EP 4 347 339 B1**
(45) Veröffentlichungstag und Bekanntmachung des Hinweises auf die Patenterteilung: **27.05.2026**
(21) Anmeldenummer: 22710065.8
(22) Anmeldetag: 03.03.2022
(51) Int. Cl.: B60T 15/36, F15B 1/24

(54) **SPEICHERKOLBENVORRICHTUNG**
ACCUMULATOR PISTON DEVICE
DISPOSITIF À PISTON D'ACCUMULATEUR

(30) Priorität: 27.05.2021 DE 102021205371
(43) Veröffentlichungstag der Anmeldung: 10.04.2024
(73) Patentinhaber: Robert Bosch GmbH, 70442 Stuttgart (DE)
(72) Erfinder: ERTLE, Marcus, 87509 Immenstadt (DE); BAREISS, Alexander, 87509 Immenstadt (DE); REINER, Juergen, 88167 Gestratz (DE); LOEFFLER, Michael, 87534 Oberstaufen (DE)
(86) Internationale Anmeldenummer: PCT/EP2022/055366
(87) Internationale Veröffentlichungsnummer: WO 2022/248090

(56) Entgegenhaltungen:
- EP-A1- 0 586 995
- WO-A1-2019/029986
- DE-A1- 102011 089 956
- US-A- 2 727 797

## Beschreibung

### Stand der Technik

Die Erfindung betrifft eine Speicherkolbenvorrichtung nach den Merkmalen des Oberbegriffs des Anspruchs 1. Eine derartige Speicherkolbenvorrichtung ist beispielsweise aus der WO 2019/029986 A1bereits bekannt. Die Erfindung unterscheidet sich von diesem Stand der Technik dadurch, dass an einem durchmesserkleinsten ersten Schaftabschnitt des Speicherkolbens eine Dichtung angeordnet ist, welcher an einer Anschlagschulter anliegt, die an einem Übergang dieses ersten Schaftabschnitts zu einem zweiten, demgegenüber in seinen Außenabmessungen größeren zweiten Schaftabschnitt anliegt.

Eine weitere Speicherkolbenvorrichtung mit einem zylindrischen, also in seinen Außenabmessungen nicht gestuft ausgebildeten, Speicherkolben ist zudem aus der DE 102011089956 A1 bekannt.

Speicherkolbenvorrichtungen werden vorzugsweise in Druckmittelspeichern von Hydraulikaggregaten zur elektronischen Druckregelung in Bremsanlagen von Kraftfahrzeugen eingesetzt. Sie sind dazu in einem Speicherzylinder beweglich geführt aufgenommen und trennen einen mit hydraulischem Druckmittel befüllbaren Speicherraum von einem Luftraum ab, in dem zumeist eine die Speicherkolbenvorrichtung beaufschlagende Kolbenfeder angeordnet ist. In den Speicherraum strömt entgegen der Kraft der Kolbenfeder Druckmittel ein, das im Rahmen einer Bremsdruckregelung aus wenigstens einer zugeordneten Radbremse der Fahrzeugbremsanlage abgelassen wird.

Bei konventionell, d.h. durch einen Verbrennungsmotor, angetriebenen Kraftfahrzeugen findet eine derartige Bremsdruckregelung üblicherweise in Abhängigkeit der aktuellen Schlupfverhältnisse an einem der Radbremse zugeordneten Rad statt. Ziel dabei ist es, einem Blockieren dieses Rades entgegen zu wirken um Seitenführungskräfte am Rad und folglich einen stabilen Fahrzustand des Fahrzeugs aufrecht zu halten. Dahingehend kritische Fahrzustände treten relativ selten auf, so dass die Druckmittelspeicher einer verhältnismäßig geringen Belastung ausgesetzt sind.

Elektronisch schlupf- bzw. druckregelbare Fahrzeugbremsanlagen sind unter der Bezeichnung ABS/ESP-Bremsanlagen hinlänglich bekannt.

Neuerdings kommen vermehrt Fahrzeuge auf den Markt, die neben einem Verbrennungsmotor mit einem elektrischen Antrieb ausgestattet sind oder die ausschließlich von einem elektrischen Motor angetrieben sind. Elektrische Antriebe haben neben ihrem lokal emissionsfreien Betrieb den Vorteil, dass sie in einen Generatorbetrieb umschaltbar sind, während dem sie Bewegungsenergie des Fahrzeugs in elektrische Energie umwandeln und dadurch das Fahrzeug abbremsen können. Die gewonnene Energie kann zu einem späteren Zeitpunkt zum Antrieb des Fahrzeugs benutzt werden, was letztlich den Wirkungsgrad des Antriebstrangs eines solchen Fahrzeugs erhöht.

Durch eine bloße Umschaltung des elektrischen Antriebs eines Fahrzeugs in einen Generatorbetrieb kann eine Vielzahl von Bremswünschen eines Fahrers umgesetzt werden, ohne dass die konventionelle hydraulische Bremsanlage des Fahrzeugs einzusetzen ist. Lediglich wenn das Generatorbremsmoment zu einer gewünschten Verzögerung des Fahrzeugs alleine nicht ausreicht, wird mit einer Betätigung der hydraulischen Bremsanlage ein unterstützendes Bremsmoment abgerufen.

Allerdings nimmt das Generatorbremsmoment mit der Fahrzeuggeschwindigkeit und damit mit der Drehzahl eines angetriebenen Rotors ab. Um demnach einen vom Fahrer vorgegebenen Bremswunsch bzw. ein dementsprechendes Gesamtbremsmoment bereitzustellen, muss mit sinkendem Anteil des Generatorbremsmoments der Anteil des hydraulischen Bremsmoments erhöht werden. Damit der Fahrer von dieser sogenannten Momentenverblendung möglichst keine Notiz nimmt, ist bei elektrisch angetriebenen Fahrzeugen während eines Bremsvorgangs eine laufende Anpassung des hydraulischen Bremsdrucks notwendig. Diese Anpassung erfolgt über das Hydraulikaggregat der hydraulischen Fremdkraftbremsanlage und respektive über eine Betätigung des Druckmittelspeichers.

Im Unterscheid zu konventionell angetriebenen Kraftfahrzeugen ist bei Bremsvorgängen von Fahrzeugen mit elektrischem Antrieb der Druckmittelspeicher des Hydraulikaggregats deshalb an nahezu jedem Bremsvorgang beteiligt und damit dementsprechend stärker belastet. Zudem kommt es bei elektrisch angetriebenen Fahrzeugen auf eine möglichst hohe Effektivität der erwähnten Energierückgewinnung bei einem Bremsvorgang an. Dies wiederum setzt voraus, dass der Druckmittelspeicher einen geringen Ansprechdruck aufweist, dass also zu einer Betätigung von dessen Speicherkolbenvorrichtung bereits geringe Druckunterschiede ausreichen.

Bekannte Druckmittelspeicher sind diesbezüglich nachteilig, weil deren Speicherkolbenvorrichtungen zu einer wirksamen Führung und Abdichtung im Speicherzylinder mit relativ hohen radialen Anpresskräften an der Wandung eines Speicherzylinders geführt sind. Notwendig sind derart hohe Anpresskräfte deshalb, weil Speicherkolbenvorrichtungen oft aus Kunststoff hergestellt sind und damit radial aus einem Werkzeug entformt werden. Dabei ergeben sich in einem Bereich der Speicherkolbenvorrichtung, an dem später eine Dichtung vorgesehen ist, Trenngrate mit einem nachteiligen Einfluss auf die Dichtverhältnisse, denen durch eine Erhöhung der Anpresskräfte Rechnung getragen werden muss.

Zwar ist es zu einer Umgehung dieses Nachteils möglich, Speicherkolbenvorrichtungen einzusetzen, die als Drehteil, bevorzugt aus Aluminium hergestellt sind, allerdings ist diese Herstellungsmethode aufwändig, teuer und trägt zu einer Erhöhung das Gesamtgewicht eines Hydraulikaggregats bei.

Von weiterem Nachteil ist, dass Dichtungen herkömmlicher Druckmittelspeicher aufgrund der erhöhten Anpresskräfte bzw. aus Verschleißschutzgründen mit Formdichtungen ausgerüstet sind, die einen massiven Dichtungsquerschnitt aufweisen. Derartige Formdichtungen haben aufgrund ihrer reduzierten Elastizität Nachteile hinsichtlich Dicht- und/oder Reibeigenschaften bei sinkenden Umgebungstemperaturen. Im Ergebnis weisen bekannte Druckmittelspeicher deshalb ein Ansprechverhalten auf, das die Effektivität bei einer Energierückgewinnung belastet und schließlich eine Entleerung des Druckmittelspeichers und damit einen Bremsdruckabbau zum Ende eines Bremsvorgangs verzögert.

### Vorteile der Erfindung

Die Erfindung nach den Merkmalen des Anspruchs 1 hat demgemäß den Vorteil, dass mit der vorgeschlagenen Speicherkolbenvorrichtung ein Druckmittelspeicher mit äußerst gutem Ansprechverhalten geschaffen wird. Das gute Ansprechverhalten ist insbesondere darauf zurückzuführen, dass zu einer Führung und Abdichtung der Speicherkolbenvorrichtung in einem Speicherzylinder niedrige radiale Anpresskräfte ausreichen. Dies bedeutet, dass ein Führungsring mit einer relativ geringen Kraft gegen die Wand des Speicherzylinders drückt, dementsprechend geringerer Reibung ausgesetzt ist und folglich ein besseres Verschleißverhalten aufweist.

Erreicht wird dies, durch eine Gestaltung der Speicherkolbenvorrichtung, welche es gestattet den Speicherkolben in Richtung der Kolbenlängsachse axial aus einem Formwerkzeug zu entformen. Damit lassen sich Trenngrate zumindest im Bereich der Anordnung einer Dichtung an der Speicherkolbenvorrichtung vermeiden. Die Speicherkolbenvorrichtung bzw. deren Speicherkolben sind weiterhin kostengünstig und mit wenig Gewicht aus Kunststoff herstellbar. Bevorzugt kann dazu ein herkömmliches Spritzgussverfahren angewendet werden.

Ein gutes Ansprechverhalten eines Druckmittelspeichers wirkt sich darüber hinaus in einer schnellen Entleerung des Speichervolumens eines Druckmittelspeichers zum Ende eines Bremsvorgangs sowie dementsprechend in einem schnellen Bremsdruckabbau aus.

Weitere Vorteile oder vorteilhafte Weiterbildungen der Erfindung ergeben sich aus den Unteransprüchen oder aus der nachfolgenden Beschreibung.

Aufgrund der geringeren radialen Anpresskräfte kann als Dichtung nunmehr ein Lippendichtring eingesetzt werden. Lippendichtringe zeichnen sich aufgrund ihrer Elastizität insbesondere durch gute Dichteigenschaften über einen großen Temperaturbereich bei gleichzeitig niedriger Reibung an der Wand des Speicherzylinders und dementsprechend geringem Verschleiß aus. Zudem sind Lippendichtringe was die Auswahl ihres Materials angeht variabler an gegebene Dichtungsverhältnisse anpassbar als bekannte Formdichtungen.

Der Führungsring übernimmt bei einer erfindungsgemäßen Speicherkolbenvorrichtung zwei Funktionen; einerseits die Führung des Speicherkolbens im Speicherzylinder und andererseits die Abstützung einer Dichtung der Speicherkolbenvorrichtung in Richtung der Kolbenlängsachse. Letztlich erleichtert das die konstruktive Gestaltung eines Speicherkolbens.

In einer insbesondere hinsichtlich der Werkzeugkosten vorteilhaften Weiterbildung der Erfindung kann der Führungsring stoffschlüssig am Kolbenschafts des Speicherkolbens angeformt sein, was beispielhaft anhand eines herkömmlichen 2-Komponeten-Spritzgussverfahrens möglich ist.

### Zeichnung

Ausführungsbeispiele der Erfindung sind in der Zeichnung dargestellt und werden in der nachfolgenden Beschreibung detailliert erläutert. Die Zeichnung umfasst dazu mehrere Figuren, in denen einander entsprechende Bauteile mit einheitlichen Bezugsziffern versehen sind.

Die Figuren zeigen die Ausführungsbeispiele jeweils im Querschnitt. In
- Fig. 1: ist ein erstes Ausführungsbeispiel einer erfindungsgemäßen Speicherkolbenvorrichtung in perspektivischer Ansicht dargestellt;
- Fig. 2: zeigt den Speicherkolben der Speicherkolbenvorrichtung bei der Herstellung in einem Formwerkzeug und
- Fig. 3: zeigt ein zweites Ausführungsbeispiel der Erfindung.

### Beschreibung

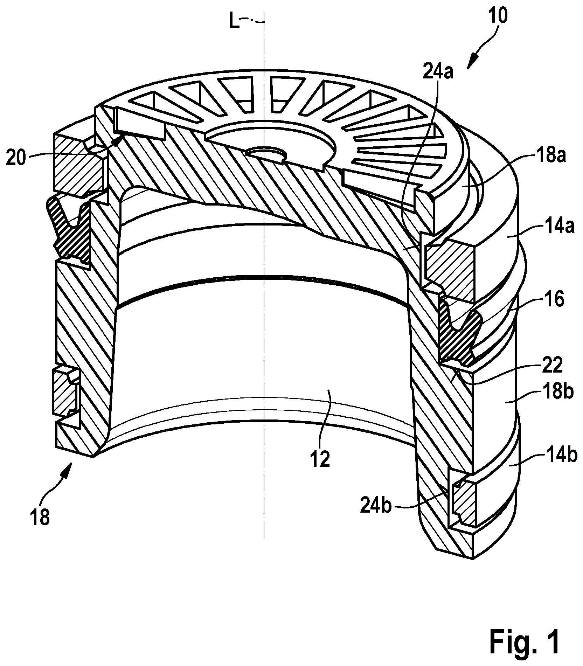

Das erste Ausführungsbeispiel einer Speicherkolbenvorrichtung (10) nach Fig. 1 besteht aus einem Speicherkolben (12), zwei jeweils am äußeren Umfang und an einander gegenüberliegenden Enden dieses Speicherkolbens (12) angebrachten Führungsringen (14a, 14b) und einem zwischen den Führungsringen (14a, 14b) platzierten Dichtring (16).

Der Speicherkolben (12) seinerseits ist als Hohlkolben ausgebildet und umfasst einen hülsenförmigen Kolbenschaft (18) sowie einen Kolbenboden (20), der ein, in der Fig.1 obenliegendes Ende dieses Kolbenschafts (18) verschließt. Die nach außen weisende Stirnfläche des Kolbenbodens (20) kann beliebig gestaltet werden und ist beim dargestellten Ausführungsbeispiel exemplarisch sternförmig strukturiert.

Der Kolbenschaft (18) ist in Richtung einer Kolbenlängsachse (L) in beispielhaft insgesamt zwei zylindrische Schaftabschnitte (18a, 18b) gegliedert, welche sich in ihren Außenabmessungen voneinander unterscheiden. Ein erster Schaftabschnitt (18a), an welchem den Kolbenboden (20) angeordnet ist, hat einen kleineren Außendurchmesser als ein sich daran anschließender zweiter Schaftabschnitt (18b), mit einem dem Kolbenboden (20) gegenüberliegenden und nach unten offenen Ende des Speicherkolbens (12). Ein Übergang zwischen dem ersten und dem zweiten Schaftabschnitt ist exemplarisch als rechtwinklige Stufe ausgeführt. Die Letztere bildet eine Anlageschulter (22) für die am Umfang des ersten Schaftabschnitts (18a) angeordnete Dichtung (16) der Speicherkolbenvorrichtung (10) aus.

Diese Dichtung (16) ist als Lippendichtring mit zwei Dichtlippen ausgebildet, die sich in Richtung der Kolbenlängsachse (L) erstrecken. An seiner der Anlageschulter (22) zugewandten Flanke ist der Dichtung (16) geschlossen, die dazu gegenüberliegende Flanke ist geöffnet. Dort schließen die Dichtlippen zwischen sich eine keilförmige und zum ersten Führungsring (14a) hin offene Umlaufnut ein.

Der Lippendichtring ist zwischen dem ersten Führungsring (14a) und der Anlageschulter (22) am ersten Schaftabschnitt (18a) der Speicherkolbenvorrichtung (10) angeordnet. Der erste Führungsring (14a) ist als geschlossener Ring ausgeführt, dessen Gesamtquerschnitt in einen, einen Innendurchmesser des Führungsrings bestimmenden ersten Querschnittsbereich und in einen zweiten Querschnittsbereich, welcher den Außendurchmesser des Führungsrings (14a) bestimmt, gegliedert ist. Der erste Querschnittsbereich des Führungsrings (14a) liegt in einer, am ersten Schaftabschnitt (18a) des Speicherkolbens (12) ausgebildeten Ringnut (24a) ein, während der zweite Querschnittsbereich radial aus dieser Ringnut (24a) vorsteht und den zweiten Schaftabschnitt (18b) des Kolbenschafts (18) radial überragt. Dieser zweite Querschnittsbereich des Führungsrings (14a) liegt zum Kolbenboden (20) hin frei, das heißt seine den Kolbenboden (20) radial überragende seitliche Flanke ist nicht vom Speicherkolben (12) überdeckt.

Ein zweiter Führungsring (14b) der Speicherkolbenvorrichtung (10) ist am zweiten Schaftabschnitt (18b), also am Schaftabschnitt mit der größeren Außenabmessung des Speicherkolbens (12), ebenfalls in einer Ringnut (24b) angeordnet. Die Außendurchmesser der beiden Führungsringe (14a, 14b) sind annährend gleich groß.

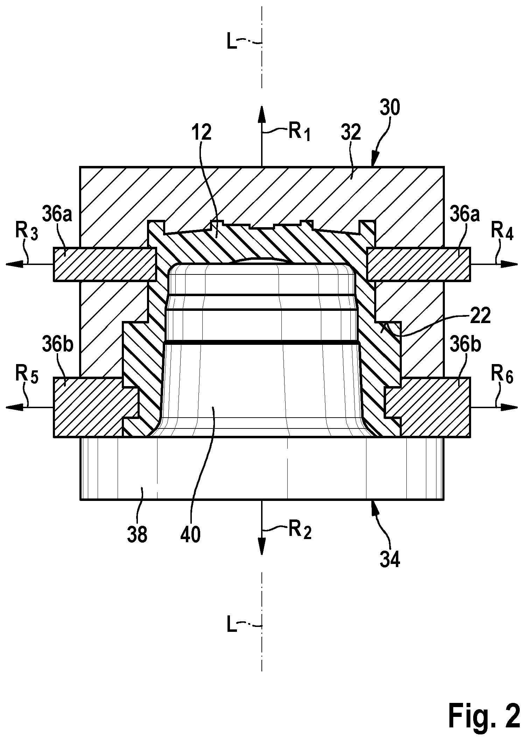

Fig. 2 zeigt ein Formwerkzeug (30) zu einer spritzgusstechnischen Herstellung des Speicherkolbens (12) nach Fig. 1 aus Kunststoff. Dieses Formwerkzeug (30) besteht aus einer topfförmigen Gussform (32), einem in diese Gussform (32) eingeführten Formstempel (34) sowie aus zwei seitlichen Schiebernpaaren (36a, 36b) die in unterschiedlichen Höhen und aus entgegengesetzten Richtungen in zugeordnete Horizontalspalte der Gussform (32) einführbar sind. Anhand der beiden Schieberpaare (36a, 36b) werden Ringnuten (24a, 24b) am Außenumfang des ersten und des zweiten Schaftabschnitts (18a, 18b) des Kolbenschafts (18) ausgebildet, welche zur Aufnahme der beiden Führungsringe (14a, 14b) vorgesehen sind. Die Innenwand der Gussform (32) bildet die Außenkontur des Speicherkolbens (12) ab, also die unterschiedlichen Außenabmessungen der beiden Schaftabschnitte (18a, 18b) sowie die Anlageschulter (22) am Übergang zwischen diesen beiden Schaftabschnitten (18a, 18b). Der Grund der Gussform (32) ist gestaltet um die oben erläuterte sternförmige Textur an der nach außen weisenden Stirnfläche des Kolbenbodens (20) auszubilden.

Mit einer Stempelplatte (38) verschließt der Formstempel (34) die Öffnung der Gussform (32) nach außen. An dieser Stempelplatte (38) ist ein Stempel (40) befestigt, der im geschlossenen Zustand in das Innere der Gussform (32) derart hineinragt, dass zwischen der Außenwand des Stempels (40) und der Innenwand der Gussform (32) ein Hohlraum eingeschlossen wird. Dieser Hohlraum nimmt den Speicherkolben (12) auf, der bei einem Spritzvorgang durch eine Befüllung des Hohlraums mit Kunststoff hergestellt wird. Nach einer Abkühlung der eingespritzten Kunststoffmasse, einem Zurückziehen der Schieberpaare (36a, 36b) und einem Abheben des Formstempels kann dieser Speicherkolben (12) in Richtung der Kolbenlängsachse (L), aus der Gussform (32) axial entformt werden. Die axiale Entformbarkeit des Speicherkolbens (12) zeigen die Richtungspfeile R1 und R2 in Fig.2 an.

Aufgrund dieser axialen Entformbarkeit des Speicherkolbens (12) aus der Gussform (32) kann zumindest ein Bereich (42) des Speicherkolbens (12), der zwischen der Ringnut (24a) am ersten Schaftabschnitt (18a) und der Anlageschulter (22) ausgebildet ist und an dem später die Dichtung (16) der Speicherkolbenvorrichtung (10) angeordnet wird, mit einer besonders hohen Oberflächenqualität und insbesondere ohne störende Trenngarte hergestellt werden. Die fehlenden Trenngrate gestatten die Verwendung einer Dichtung (16), die mit relativ geringer radialer Vorspannung gegen eine Aufnahme für die Speicherkolbenvorrichtung (10) drückt und erlaubt damit den Einsatz einer Lippendichtung anstelle einer Dichtung (16) mit einem massiven Dichtungsquerschnitt.

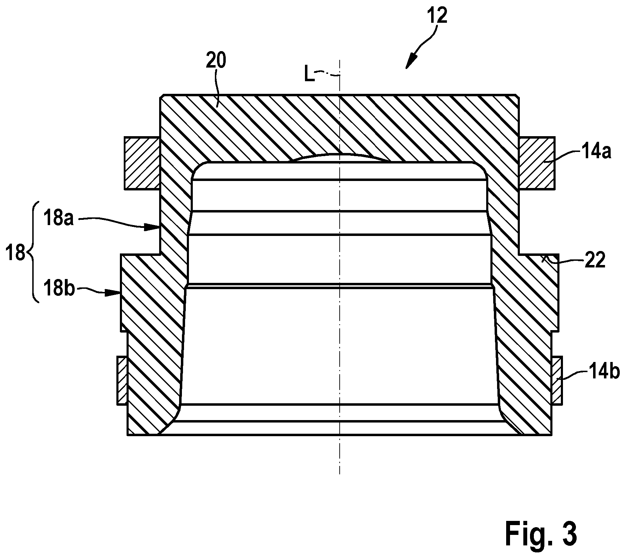

Fig. 3 zeigt ein zweites Ausführungsbeispiel eines mit Führungsringen (14a, 14b) bestückten Speicherkolbens (12) im Querschnitt. Dieser Speicherkolben (12) entspricht in seiner inneren sowie in seiner äußeren Form dem in Zusammenhang mit der Beschreibung von Fig. 1 oder Fig. 2 erläuterten Speicherkolben (12). Unterschiedlich zu den zuvor erläuterten Speicherkolben (12) ist allerdings, dass die beiden Führungsringe (14a, 14b) nicht in Ringnuten angeordnet sind, sondern vielmehr in einem Zwei-Komponenten-Spritzverfahren unmittelbar an die Umfangsfläche des Speicherkolbens (12) angeformt bzw. angespritzt worden sind. Durch angeformte, also stoffschlüssig am Speicherkolben (12) befestigte Führungsringe (14a, 14b) kann auf Schieberpaare am Werkzeug zur Herstellung von Ringnuten zur Aufnahme von Führungsringen bei der Speicherkolbenherstellung verzichtet werden. Zwangsläufig werden damit auch Trenngrate, welche sich an der Trennfläche zwischen dem jeweiligen Schieberpaar einstellen vermieden. Weiterhin vereinfacht sich die Gussform zur Herstellung des Speicherkolbens (12) und damit dessen Kosten.

Selbstverständlich sind über das Beschriebene hinausgehende Änderungen oder Ergänzungen an einer Speicherkolbenvorrichtung (10) denkbar, ohne dass diese Änderungen den Schutzbereich des Anspruchs 1 oder eines seiner abhängigen Unteransprüche verlassen.

## Patentansprüche

1. Speicherkolbenvorrichtung (10),
insbesondere für einen Druckmittelspeicher eines Hydraulikaggregats zur Bremsdruckregelung in einer elektronisch druckregelbaren Fremdkraftbremsanlage eines vorzugsweise elektrisch antreibbaren Kraftfahrzeugs,
mit einem Speicherkolben (12), der einen hülsenförmigen Kolbenschaft (18) und einen Kolbenboden (20) aufweist, welcher den hülsenförmigen Kolbenschaft (18) an einem seiner Enden verschließt,
wobei der Kolbenschaft (18) in Richtung einer Kolbenlängsachse (L) in aufeinanderfolgende Schaftabschnitte (18a, 18b) unterschiedlicher Außenabmessungen gegliedert ist,
wobei die Außenabmessungen der Schaftabschnitte (18a, 18b) ausgehend von einem ersten Schaftabschnitt (18a), an dem der Kolbenboden (20) angeordnet ist und der die kleinste Außenabmessung aufweist, in Stufen zunehmen,
**dadurch gekennzeichnet,**
**dass** sich der erste Schaftabschnitt (18a) in Richtung der Kolbenlängsachse (L) von dem vom Kolbenboden (20) verschlossenen Ende des Speicherkolbens (12) bis zu einer ersten Stufe erstreckt, an welcher der erste Schaftabschnitt (18a) in einen zweiten Schaftabschnitt (18b) übergeht,
**dass** die erste Stufe eine Anschlagschulter (22) für eine am ersten Schaftabschnitt (18a) angeordnete Dichtung (16) der Speicherkolbenvorrichtung (10) ausbildet und
**dass** der Speicherkolben (12) am ersten Schaftabschnitt (18a) mit einem Führungsring (14a) bestückt ist, welcher den Kolbenschaft (18) umschließt, welcher den folgenden zweiten Schaftabschnitt (18b) des Kolbenschafts (18) radial überragt und
wobei in Richtung der Kolbenlängsachse (L) eine dem Kolbenboden (20) zugewandte seitliche Flanke wenigstens eines Querschnittsbereichs des ersten Führungsrings (14a) nicht vom Speicherkolben (12) überdeckt ist.

2. Speicherkolbenvorrichtung (10) nach Anspruch 1,
**dadurch gekennzeichnet,**
**dass** die Dichtung (16) am Umfang des ersten Schaftabschnitts (18a), zwischen dem ersten Führungsring (14a) und der Anlageschulter (22) angeordnet ist.

3. Speicherkolbenvorrichtung nach Anspruch 2,
**dadurch gekennzeichnet,**
**dass** die Dichtung (16) ein Lippendichtring ist, der mit einer geschlossenen Flanke in Richtung der Kolbenlängsachse (L) an der Anlageschulter (22) abgestützt ist.

4. Speicherkolbenvorrichtung nach einem der Anspruch 1 bis 3,
**dadurch gekennzeichnet,**
**dass** der erste Führungsring (14a) in einer Ringnut (24a) am ersten Schaftabschnitt (18a) des Speicherkolbens (12) abschnittsweise aufgenommen ist und abschnittsweise aus der Ringnut (24a) radial vorsteht.

5. Speicherkolbenvorrichtung nach einem der Ansprüche 1 bis 4,
**dadurch gekennzeichnet,**
**dass** der Speicherkolben (12) ein Spritzgussteil ist,
das in Richtung der Kolbenlängsachse (L) aus einem Formwerkzeug (30) entformbar ist und aus Kunststoff besteht.

6. Speicherkolbenvorrichtung nach einem der Ansprüche 1 bis 5,
**dadurch gekennzeichnet,**
**dass** die Dichtung (16) an einer spritzgusstechnisch und ohne spanende Nachbearbeitung geschaffenen Mantelwand des ersten Schaftabschnitts (18a) des Speicherkolbens (12) anliegt.

7. Speicherkolbenvorrichtung nach einem der Ansprüche 1 bis 6,
**dadurch gekennzeichnet,**
**dass** der Speicherkolben (12) am Schaftabschnitt (18b) mit der größten Außenabmessung des Speicherkolbens (12) mit einem zweiten Führungsring (14b) ausgestattet ist, wobei
die Außenabmessungen der Führungsringe (14a, 14b) einander wenigstens annähernd entsprechen.

8. Speicherkolbenvorrichtung nach einem der Ansprüche 1 bis 7,
**dadurch gekennzeichnet,**
**dass** wenigstens der erste Führungsring (14a) der Speicherkolbenvorrichtung (10) stoffschlüssig am ersten Schaftabschnitt (18a) des Kolbenschafts (18) angeformt ist.

9. Speicherkolbenvorrichtung nach einem der Ansprüche 1 bis 8,
**dadurch gekennzeichnet,**
**dass** der Speicherkolben (12) den ersten Schaftabschnitt (18a) und genau einen zweiten Schaftabschnitt (18b) aufweist.

## Claims

1. Accumulator-piston device (10),
in particular for a pressure-medium accumulator of a hydraulic unit for brake-pressure regulation in an electronically pressure-regulatable power brake system of a preferably electrically driveable motor vehicle,
having an accumulator piston (12) which has a sleeve-shaped piston shaft (18) and has a piston crown (20) which closes off the sleeve-shaped piston shaft (18) at one of its ends,
wherein the piston shaft (18) is divided into successive shaft portions (18a, 18b) of different outer dimensions in the direction of a piston longitudinal axis (L),
wherein the outer dimensions of the shaft portions (18a, 18b) increase in steps when proceeding from a first shaft portion (18a) on which the piston crown (20) is arranged and which has the smallest outer dimension, **characterized**
**in that** the first shaft portion (18a) extends in the direction of the piston longitudinal axis (L) from that end of the accumulator piston (12) which is closed off by the piston crown (20) as far as a first step at which the first shaft portion (18a) transitions into a second shaft portion (18b),
**in that** the first step forms an abutment shoulder (22) for a seal (16), arranged on the first shaft portion (18a), of the accumulator-piston device (10), and in that the accumulator piston (12) is provided on the first shaft portion (18a) with a guide ring (14a) which surrounds the piston shaft (18) and which projects radially beyond the second shaft portion (18b) of the piston shaft (18) that follows, and
wherein, in the direction of the piston longitudinal axis (L), a lateral flank, facing towards the piston crown (20), of at least one cross-sectional region of the first guide ring (14a) is not covered by the accumulator piston (12).

2. Accumulator-piston device (10) according to Claim 1,
**characterized**
**in that** the seal (16) is arranged on the circumference of the first shaft portion (18a), between the first guide ring (14a) and the abutment shoulder (22).

3. Accumulator-piston device according to Claim 2,
**characterized**
**in that** the seal (16) is a lip sealing ring which is supported against the abutment shoulder (22) in the direction of the piston longitudinal axis (L) at a closed flank.

4. Accumulator-piston device according to one of Claims 1 to 3,
**characterized**
**in that** the first guide ring (14a) is sectionally received in an annular groove (24a) in the first shaft portion (18a) of the accumulator piston (12) and sectionally projects radially out of the annular groove (24a).

5. Accumulator-piston device according to one of Claims 1 to 4,
**characterized**
**in that** the accumulator piston (12) is an injection-moulded part which is removable from a moulding tool (30) in the direction of the piston longitudinal axis (L) and consists of plastic.

6. Accumulator-piston device according to one of Claims 1 to 5,
**characterized**
**in that** the seal (16) abuts against a lateral wall of the first shaft portion (18a) of the accumulator piston (12), said lateral wall having been created by injection moulding and without cutting post-machining.

7. Accumulator-piston device according to one of Claims 1 to 6,
**characterized**
**in that** the accumulator piston (12) is provided with a second guide ring (14b) on the shaft portion (18b) with the largest outer dimension of the accumulator piston (12), wherein
the outer dimensions of the guide rings (14a, 14b) correspond at least approximately to one another.

8. Accumulator-piston device according to one of Claims 1 to 7,
**characterized**
**in that** at least the first guide ring (14a) of the accumulator-piston device (10) is integrally formed on the first shaft portion (18a) of the piston shaft (18) in a materially bonded manner.

9. Accumulator-piston device according to one of Claims 1 to 8,
**characterized**
**in that** the accumulator piston (12) has the first shaft portion (18a) and exactly one second shaft portion (18b).

## Revendications

1. Dispositif à piston d'accumulateur (10),
en particulier pour un accumulateur de fluide sous pression d'une unité hydraulique pour la régulation de pression de freinage dans un système de freinage à force extérieure à régulation électronique de pression d'un véhicule à moteur de préférence à entraînement électrique,
avec un piston d'accumulateur (12), qui comporte une tige de piston (18) en forme de douille et une tête de piston (20), qui ferme la tige de piston (18) en forme de douille sur l'une de ses extrémités,
la tige de piston (18) étant divisée en sections de tige successives (18a, 18b) de dimensions extérieures différentes dans la direction d'un axe longitudinal (L) de piston,
les dimensions extérieures des sections de tige (18a, 18b) augmentant par paliers en partant d'une première section de tige (18a), sur laquelle est disposée la tête de piston (20) et qui a la dimension extérieure la plus petite,
**caractérisé en ce**
**que** la première section de tige (18a) s'étend dans la direction de l'axe longitudinal (L) de piston depuis l'extrémité du piston d'accumulateur (12) fermée par la tête de piston (20) jusqu'à un premier palier, sur lequel la première section de tige (18a) passe dans une seconde section de tige (18b),
**que** le premier palier forme un épaulement de butée (22) pour un joint d'étanchéité (16), disposé sur la première section de tige (18a), du dispositif à piston d'accumulateur (10), et
**que** le piston d'accumulateur (12) est équipé, sur la première section de tige (18a), d'une bague de guidage (14a), qui entoure la tige de piston (18), qui dépasse radialement de la seconde section de tige (18b) suivante de la tige de piston (18), et
un flanc latéral d'au moins une zone de section transversale de la première bague de guidage (14a) tourné vers la tête de piston (20) n'étant pas recou-vert par le piston d'accumulateur (12) dans la direction de l'axe longitudinal (L) de piston.

2. Dispositif à piston d'accumulateur (10) selon la revendication 1,
**caractérisé en ce**
**que** le joint d'étanchéité (16) est disposé sur la périphérie de la première section de tige (18a) entre la première bague de guidage (14a) et l'épaulement de butée (22).

3. Dispositif à piston d'accumulateur selon la revendication 2,
**caractérisé en ce**
**que** le joint d'étanchéité (16) est une bague d'étanchéité à lèvre, qui s'appuie sur l'épaulement de butée (22) avec un flanc fermé dans la direction de l'axe longitudinal (L) de piston.

4. Dispositif à piston d'accumulateur selon l'une des revendications 1 à 3,
**caractérisé en ce**
**que** la première bague de guidage (14a) est reçue par sections dans une rainure annulaire (24a) sur la première section de tige (18a) du piston d'accumulateur (12) et fait saillie radialement par sections de la rainure annulaire (24a).

5. Dispositif à piston d'accumulateur selon l'une des revendications 1 à 4,
**caractérisé en ce**
**que** le piston d'accumulateur (12) est une pièce moulée par injection,
qui peut être retirée d'un outil de moulage (30) dans la direction de l'axe longitudinal (L) de piston et qui est constituée de matière plastique.

6. Dispositif à piston d'accumulateur selon l'une des revendications 1 à 5,
**caractérisé en ce**
**que** le joint d'étanchéité (16) repose sur une paroi d'enveloppe, réalisée par une technique de moulage par injection et sans usinage ultérieur par enlèvement de copeaux, de la première section de tige (18a) du piston d'accumulateur (12).

7. Dispositif à piston d'accumulateur selon l'une des revendications 1 à 6,
**caractérisé en ce**
**que** le piston d'accumulateur (12) est équipé d'une seconde bague de guidage (14b) sur la section de tige (18b) avec la plus grande dimension extérieure du piston d'accumulateur (12),
les dimensions extérieures des bagues de guidage (14a, 14b) correspondant au moins approximativement entre elles.

8. Dispositif à piston d'accumulateur selon l'une des revendications 1 à 7,
**caractérisé en ce**
**qu'**au moins la première bague de guidage (14a) du dispositif à piston d'accumulateur (10) est formée par liaison de matière sur la première section de tige (18a) de la tige de piston (18).

9. Dispositif à piston d'accumulateur selon l'une des revendications 1 à 8,
**caractérisé en ce**
**que** le piston d'accumulateur (12) comporte la première section de tige (18a) et exactement une seconde section de tige (18b).
